(19) Europäisches Patentamt
European Patent Office
Office européen des brevets

(11) Veröffentlichungsnummer: **0 170 253**
**A2**

(12) # EUROPÄISCHE PATENTANMELDUNG

(21) Anmeldenummer: 85109565.3

(22) Anmeldetag: 30.07.85

(51) Int. Cl.⁴: **C 01 B 17/04**

(30) Priorität: 02.08.84 DE 3428548

(43) Veröffentlichungstag der Anmeldung: 05.02.86 Patentblatt 86/6

(84) Benannte Vertragsstaaten: AT BE CH DE FR GB IT LI NL

(71) Anmelder: **Linde Aktiengesellschaft**
**Abraham-Lincoln-Strasse 21**
**D-6200 Wiesbaden(DE)**

(72) Erfinder: **Heisel, Michael, Dr.-Ing.**
**Gistlstrasse 54**
**D-8023 Pullach(DE)**

(72) Erfinder: **Linde, Gerhard, Dr.**
**Eichleite 50**
**D-8022 Grünwald(DE)**

(72) Erfinder: **Marold, Freimut, Dipl.-Ing.**
**Hauptstrasse 99**
**D-8014 Neubiberg(DE)**

(74) Vertreter: **Schaefer, Gerhard, Dr.**
**Linde Aktiengesellschaft Zentrale Patentabteilung**
**D-8023 Höllriegelskreuth(DE)**

(54) **Verfahren zur Erzeugung von elementarem Schwefel.**

(57) Es wird ein Verfahren zur Erzeugung von elementarem Schwefel aus $SO_2$ beschrieben. Um dies auf einfache und kostengünstige Weise zu bewerkstelligen, wird vorgeschlagen, daß das $SO_2$ in einem regenerierbaren Lösungsmittel gelöst, die Lösung mit einem Reduktionsmittel in Kontakt gebracht und der entstandene Schwefel von der Lösung abgetrennt wird.

EP 0 170 253 A2

0170253

## Verfahren zur Erzeugung von elementarem Schwefel

Die Erfindung betrifft ein Verfahren zur Erzeugung von elementarem Schwefel aus $SO_2$.

Es gibt eine Reihe von Verfahren zur Umwandlung von $SO_2$ zu elementarem Schwefel. Sie beruhen im wesentlichen auf zwei Grundverfahren: Reduktion von $SO_2$ durch Überleiten über glühendem Koks; Reduktion von $SO_2$ durch Zugabe eines $H_2$- und/oder CO-haltigen Gases als Reduktionsmittel und Umsetzung in der Gasphase über einem Katalysator.

Die bekannten Verfahren haben jedoch für die Verwendung bei Rauchgasentschwefelungsanlagen die folgenden wesentlichen Nachteile: Bei Reduktion über glühendem Koks bilden sich viele Nebenprodukte, die durch Verbrennen zersetzt werden müssen (z.B. COS, $CS_2$) und deshalb entweder in dem Brennraum für die Dampfkessel oder in einem eigenen Ofen verbrannt und vor die Rauchgasentschwefelung zurückgeführt werden müßten. Bei Reduktion durch Zugabe eines Reduktionsmittels (z.B. Hydrocarbon Processing, April 1984, Seite 83) ergibt sich das Problem , daß eine, wenn auch vereinfachte Claus-Anlage benötigt wird, um aus dem durch Reduktion er-

zeugten $H_2S$ durch Umsetzung mit $SO_2$ elementaren Schwefel zu erzeugen. Der apparative Aufwand hierfür ist erheblich.

Der Erfindung liegt daher die Aufgabe zugrunde, ein verbessertes Verfahren bereitzustellen, mit dem auf einfache und kostengünstige Weise Elementarschwefel aus $SO_2$ erzeugt werden kann.

Diese Aufgabe wird erfindungsgemäß dadurch gelöst, daß das $SO_2$ in einem regenerierbaren Lösungsmittel gelöst, die Lösung mit einem Reduktionsmittel in Kontakt gebracht und der entstandene Schwefel von der Lösung abgetrennt wird.

Erfindungsgemäß wird somit eine $SO_2$-Reduktion in flüssiger Phase durchgeführt. Dabei hat sich gezeigt, daß der apparative Aufwand bei dieser Flüssigphasenumsetzung des Schwefels aus $SO_2$ wesentlich geringer ist als bei einer Gasphasenumsetzung.

Als Lösungsmittel kommen insbesondere physikalische in Frage, die beispielsweise bei einer Rauchgas- oder Claus-Abgas-Entschwefelung eingesetzt worden sind und daher bereits mit $SO_2$ beladen sein können, das aus dem Lösungsmittel zu dessen Regenerierung entfernt werden muß. Dazu wird das beladene Lösungsmittel mit einem Reduktionsmittel versetzt, wodurch die Umsetzung des $SO_2$ zu Elementarschwefel einsetzt. Gegebenenfalls kann die Reaktionsgeschwindigkeit erhöht und/oder die Gleichgewichtseinstellung und/oder Sedimentation verbessert werden durch Zugabe eines Katalysators zum Lösungsmittel. Es findet durch die Reaktion eine chemische Regenerierung des Lösungsmittels statt. Die bisherige thermische Regenerierung zur $SO_2$-Austreibung aus dem Lösungsmittel kann entfallen. Daraus resultieren erhebliche Einsparungen an Wärmetauschern und an der Regenerierkolonne. Der Energieaufwand für die bisherige thermische Regenerierung des Lösungsmittels entfällt weitgehend, wodurch sich die Verbrauchszahlen reduzieren. Dabei ist der zusätzliche Investitionsaufwand für die Abtrennung des Elementarschwefels kleiner als die Einsparung für die Vereinfachung des bisherigen Verfahrens.

Durch den Wegfall der Regenerierung des gesamten Lösungsmittels (nur ein Teilstrom muß zur Wasserabtrennung regeneriert werden) sowie der gegebenenfalls erforderderlichen $SO_2$-Reinigung und -Verflüssigung sind auch die Verbrauchszahlen für das vorgeschlagene Verfahren günstiger als für das bisherige.

Mit dem erfindungsgemäßen Verfahren wird marktfähiger Schwefel erzeugt. Dieses Produkt ist problemlos und ohne Umweltgefährdung lagerbar, transportierbar und verkäuflich. Im Gegensatz dazu ist die Lagerung, der Transport und die Vermarktung von $SO_2$ schwierig.

Ein weiterer Vorteil der erfindungsgemäßen Verfahrensführung liegt darin, daß eine Verringerung des Platzbedarfes durch Verkleinerung der Gesamtanlage eintritt. Als weiterer wesentlicher Gesichtspunkt ist zu bemerken, daß durch elementaren Schwefel im Gegensatz zu $SO_2$ bei Lagerung und Transport keine Umweltgefährdung eintritt.

Als Lösungsmittel können dabei alle physikalisch wirkenden Absorptionsmittel in Betracht gezogen werden, die insbesondere eine Selektivität für $SO_2$ gegenüber beispielsweise $CO_2$ oder, falls vorhanden, leichten Kohlenwasserstoffen aufweisen. Diese Lösungsmittel sind insbesondere Alkohole, wie Methanol, Ketone, n-Methylpyrollidon, Dimethylformamid, Polyäthylenglykoläther, Butyrolacton, Aromaten.

Von besonderem Vorteil ist es, wenn die Lösung im Kreislauf geführt wird, wobei ab dem in Kontaktbringen mit dem Reduktionsmittel bis zur Schwefelabtrennung in der Lösung eine ungefähr bei oder über der Sättigung liegende Schwefelkonzentration aufrechterhalten wird, während nach der Schwefelabtrennung und im Zuge der Regenerierung des Lösungsmittels bis zum Wiederinberührungbringen mit dem Reduktionsmittel eine Schwefelkonzentration eingestellt wird, die deutlich unter der Sättigungsgrenze liegt.

Das Lösungsmittel, das die Fest-Flüssig-Trennung verläßt, steht mit festem Schwefel thermodynamisch im Gleichgewicht, d.h. eine Abkühlung kann zu weiterem Ausfallen von Schwefelkristallen führen. Um zu verhindern, daß Rohrleitungen, Armaturen oder Apparate durch Schwefelablagerungen in der Funktion beeinträchtigt werden, ist erfindungsgemäß vorgesehen, den schwefelgesättigten Teilstrom aus der Fest-Flüssig-Trennung mit untersättigtem Waschmittel aus der Regenerierung zu vermischen. Weiterhin ist vorgesehen, während erhöhter Schwefelkonzentration die Temperatur der Lösung niedriger zu halten als während niedrigerer Schwefelkonzentration. Dies bedeutet eine Kühlung in der Säule, im Bereich zwischen Säule und Reaktionsbehälter, oder im Bereich zwischen Reaktionsbehälter und Fest-Flüssig-Trennung, mit deren Hilfe die Temperatur der Schwefel-Lösungsmittel-Suspension gesenkt werden kann, so daß mehr Schwefel fest ausfällt. Hierdurch wird außerdem erreicht, daß die Temperatur des Lösungsmittelrücklaufes auf niedrigerem Niveau gehalten werden kann, was der Aufnahmekapazität des Lösungsmittels zugute kommt. Um Lösungsmittelverluste zu reduzieren, ist gegebenenfalls eine direkte oder indirekte Kopfkühlung an der Waschkolonne vorzusehen, vorzugsweise ein Wasserquenchkreislauf.

In Weiterbildung des Erfindungsgedankens ist dabei vorgesehen, daß die Lösung bei einer Temperatur zwischen -40°C und +200°C, vorzugsweise 20°C und 60°C gehalten wird. Die jeweilige Temperatur hängt dabei von dem verwendeten Lösungsmittel ab.

Zweckmäßigerweise wird das Reduktionsmittel in einem zur Umsetzung des $SO_2$ zu elementarem Schwefel ungefähr stöchiometrischen Verhältnis zugegeben. Abweichungen von der Stöchiometrie führen zu einem unvollständigen Umsatz, der allerdings aus Gründen der Betriebssicherheit erwünscht sein kann.

Als Reduktionsmittel kommen bei dem erfindungsgemäßen Verfahren alle hierfür bekannten Stoffe in Betracht. Als besonders günstig haben sich $H_2$ und $H_2S$ erwiesen. Die Umsetzung erfolgt gemäß

$$SO_2 + 2H_2 \longrightarrow 1/x\ S_x + 2H_2O \qquad (1)$$

bzw.

$$SO_2 + 2H_2S \longrightarrow 3/x\ S_x + 2H_2O \qquad (2)$$

Die Reduktionsgase können dabei gasförmig oder im Lösungsmittel gelöst zugegeben werden.

In Weiterbildung des Erfindungsgedankens ist zur Bereitstellung des Reduziergases für die Schwefelerzeugung folgendes vorgesehen: Ein vorzugsweise kohlenwasserstoffhaltiger Brennstoff, insbesondere Erdgas, wird unterstöchiometrisch verbrannt, das entstehende Gasgemisch mit flüssigem Schwefel in Kontakt gebracht, wobei ein Teil des Schwefels reduziert wird, abgekühlt, über einem Katalysator der Restschwefel und gegebenenfalls in der thermischen Stufe gebildete Schwefelverbindungen, wie z.B. COS und $CS_2$ , zu $H_2S$ hydriert, und das hierbei entstehende Gasgemisch als Reduktionsmittel eingesetzt.

Die katalytische Hydrierung des Schwefels zu $H_2S$ wird bei Temperaturen zwischen 150°C und 560°C, vorzugsweise 180°C und 350°C durchgeführt. Das entstehende Gasgemisch liegt demnach bei hoher Temperatur vor und wird bevorzugt vor Einbringen in die Lösung in indirektem Wärmetausch abgekühlt.

In vielen Lösungsmitteln fällt der Schwefel in kolloidaler Form an. Es ist daher vorgesehen, dem Lösungsmittel einen die Sedimentation des sich bildenden Schwefels begünstigenden und/oder die Reaktionsgeschwindigkeit der Umsetzung beschleunigenden Zusatz zuzugeben. In diesem Fall wird erreicht, daß die Korngröße des entstehenden Schwefels größer und damit die Sedimentationsfähigkeit des Schwefels verbessert wird. Der Zusatz wird in vorteilhafter Weise in einer Menge von 1 bis 20 g/l Lösungsmittel, vorzugsweise 1 bis 10 g/l Lösungsmittel zugegeben.

Der entstandene Schwefel wird sodann aus der flüssigen Phase mit Vorteil mittels eines Fest-Flüssig-Trennverfahrens abgetrennt, wie z.B. einer Zentrifuge, eines Hydrozyklons oder eines Rüttelsiebes. Hierbei wird ein konzentriertes Gemisch von festem Schwefel und flüssiger Phase abgezogen. Dieses Gemisch wird bevorzugt soweit aufgeheizt, daß sich zwei flüssige Phasen ausbilden und als die eine flüssige Phase Schwefel und als die andere flüssige Phase schwefelfreies Lösungsmittel abgezogen werden können. Die Aufheizung des Gemisches wird dabei zweckmäßig auf eine Temperatur ungefähr vom Schmelzpunkt des Schwefels, d.h. ca. 120°C, durchgeführt. Insbesondere kann die Aufheizung durch Abwärmenutzung aus der Verbrennung der kohlenwasserstoffhaltigen Brennstoffe durchgeführt werden.

Gegebenenfalls kann auf eine optimale Lösungsmittelrückgewinnung verzichtet werden und der Schwefel unmittelbar aus der Fest-Flüssig-Trennstufe als Produkt gewonnen werden.

Es gibt selbstverständlich noch andere Möglichkeiten zur Bereitstellung von Reduziergas für die Schwefelerzeugung, nämlich beispielsweise $H_2$ oder $H_2S$ aus Flaschen; $H_2$ aus Ammoniakzersetzung; $H_2S$-Erzeugung aus $SO_2$ statt aus Elementarschwefel, wobei $SO_2$ beispielsweise aus der Rauchgasentschwefelung gewonnen wird, Rohgas zu einer Claus-Anlage.

Im folgenden wird das erfindungsgemäße Verfahren anhand eines schematisch dargestellten Beispiels näher erläutert.

Über Leitung 1 werden 100 000 Nm³/h eines $SO_2$-haltigen Rohgases mit einem Druck von ca. 1,1 bar und einer Temperatur von 61,3°C einer Waschsäule 2 zugeführt. Das Rohgas hat dabei folgende Zusammensetzung:

| | |
|---|---|
| $N_2$ | 78,06 mol% |
| $O_2$ | 4,97 mol% |
| $CO_2$ | 9,87 mol% |
| $SO_2$ | 0,08 mol% |
| $H_2O$ | 6,97 mol% |
| HCl | 0,01 mol% |
| HF | 23 ppm |
| $NO_x$ | 0,04 mol% |
| $SO_3$ | 30 ppm |

Im unteren Kolonnenabschnitt kann eine nichtdargestellte Wasserwäsche stattfinden, wobei Feststoffe und wasserlösliche Verbindungen aus dem Gas entfernt werden. Zudem wird ein Teil des eingebrachten Wasserdampfes kondensiert und abgeführt und belastet nicht mehr die folgenden Verfahrensschritte. Im oberen Teil wird die Waschsäule mit regeneriertem Lösungsmittel über Leitung 3 beaufschlagt. Das Lösungsmittel, beispielsweise Polyäthylenglykoldimethyläther, nimmt im Gegenstrom zu aufsteigendem Gas aus diesem $SO_2$ auf und verläßt die Säule am Boden über Leitung 4. 95 262 Nm³/h $SO_2$-freies Reingas werden mit einer Temperatur von 16,5°C und einem Druck von 0,97 bar über Kopf (Leitung 5) abgezogen. Dieses Gas hat folgende Zusammensetzung:

| | | |
|---|---|---|
| $N_2$ | 82,36 | mol% |
| $O_2$ | 5,21 | mol% |
| $CO_2$ | 10,46 | mol% |
| $SO_2$ | 95 | ppm |
| $H_2O$ | 1,92 | mol% |
| $NO_x$ | 430 | ppm |

Zur Lösungsmittelrückgewinnung kann dabei eine ebenfalls nichtdargestellte Wassernachwäsche im Kopf der Waschsäule 2 stattfinden.

Dem mit $SO_2$ beladenen Lösungsmittel in Leitung 4 wird in einem Reaktionsbehälter 6 $H_2S$ zugegeben, und zwar gasförmig oder in Lösungsmittel gelöst. Dadurch bildet sich nach Gleichung (2) in bekannter Weise durch die Claus-Reaktion elementarer Schwefel.

Da das $H_2S$ im allgemeinen nicht als reine Fraktion vorliegt, bildet sich über dem Lösungsmittel in dem Behälter 6 eine Gasphase aus Inertgasen aus. Diese können über die Leitung 7 in die Waschsäule 2 oder - abhängig von den Anforderungen am Aufstellungsort - in den noch zu beschreibenden Brenner des Dampfkessels zurückgeführt werden. Insgesamt werden 551 Nm³/h Inertgase mit einer Temperatur v. ca. 30°C und einem Druck von etwa 1 bar zurückgeführt, die folgende Zusammensetzung aufweisen:

| | | |
|---|---|---|
| $N_2$ | 75 | mol% |
| $CO_2$ | 24 | mol% |
| $H_2O$ | 1 | mol% |

Das Lösungsmittel in dem Reaktionsbehälter 6 enthält nach der Reaktion große Schwefelkristalle, die sich am Boden sammeln. Dieses Gemisch wird über Pumpe 8 zu einer üblichen Fest-Flüssig-Trennung, vorzugsweise einem Hydrozyklon 9, gefahren. Dort wird eine große, schwefelarme Lösungsmittelmenge abgetrennt und über Leitungen 10 und 3 zur Waschsäule 2 zurückgeführt. Ein Teilstrom (ca. 10%) kann gegebenenfalls über die gestrichelt dargestellte Leitung 11 zu einer Regeneriersäule 12 abgezweigt werden.

Unten am Hydrozyklon wird ein konzentriertes Gemisch von Schwefelkristallen und Lösungsmittel über Leitung 13 in einer Menge von 146 $Nm^3/h$ abgezogen und in einem Behälter 14 auf etwa 120°C aufgeheizt, so daß der Schwefel flüssig wird. Die Beheizung kann gegebenenfalls durch Abwärmenutzung aus dem bereits erwähnten Brenner oder vorzugsweise aus einem Reaktor 15 erfolgen, indem ein Teilstrom über die Heizschlange des Behälters 14 geführt wird. Es besteht auch die Möglichkeit, das Lösungsmittel direkt, eventuell nach Abkühlung, zur Waschsäule 2 zurückzuführen. Auch eine Abtrennung von Wasserdämpfen am Kopf des Behälters 14 ist möglich sowie - getrennt davon - Abzug schwefelfreien Lösungsmittels, das zur Waschsäule 2 oder, gegebenenfalls auch teilweise, zur Regeneriersäule 12 geleitet wird.

Flüssiges Schwefelprodukt (73 $Nm^3/h$) wird über Leitung 17 abgezogen und zur Lagerung oder Verfestigung geführt. Vorzugsweise wird ein Teilstrom des flüssigen Schwefels über Leitung 18 mit heißem Gas in einem Reduziergaserzeuger 19 gemischt. Dadurch verdampft der Schwefel,

reagiert mit dem Reduziergas und wird zusammen mit dem Reduziergas über einen Katalysator im Reaktor 15 geführt, wo die Feinhydrierung des Restschwefels und der Schwefelverbindungen (außer $H_2S$) abläuft.

Das Reduziergas wird von außen zugeführt. Infrage kommen alle Gase, die $H_2$ und CO oder CO und Wasser enthalten. Vorzugsweise werden jedoch kohlenwasserstoffhaltige Brennstoffe, insbesondere Erdgas unterstöchiometrisch verbrannt. Hierzu werden 94 $Nm^3/h$ Erdgas mit einer Temperatur von 20°C und einem Druck von 5 bar sowie einer Zusammensetzung von $N_2$ 4,3 mol% und $CH_4$ 95,7 mol% über Leitung 20 und Luft (514 $Nm^3/h$) über Leitung 21 mit Verdichter 22 herangeführt. Es entsteht ein Gemisch aus $H_2$, CO, $CO_2$, $N_2$, $H_2O$ und Spuren an Methan. In dieses Gas wird flüssiger Schwefel eingespritzt. Beim Kontakt zwischen Schwefel und Reduziergas kommt es spontan zur Bildung von Schwefelverbindungen, insbesondere von $H_2S$, wobei sich die Temperatur deutlich erhöht. Dieses Gas wird vorzugsweise mit Wasser aus Leitung 23 oder Kondensat aus Leitung 24 durch Direkteinspritzung und/oder durch Mischung mit schwefelhaltigem Rohgas gekühlt, gegebenenfalls auch erneut mit flüssigem Schwefel in Kontakt gebracht, so daß das Gasgemisch Schwefeldampf aufnimmt.

Das Gasgemisch tritt in den Reaktor 15 ein und dort werden über einem Katalysator Schwefel und Schwefelverbindungen zu $H_2S$ hydriert. Parallel hierzu läuft auch die CO-Shift-Reaktion

$$CO + H_2O \longrightarrow H_2 + CO_2 \qquad (3)$$

ab, wenn CO und $H_2O$ im Gas enthalten sind.

Diese Umsetzungen und dafür einzusetzende Katalysatoren,

wie z.B. CoMo-Katalysatoren, sind an sich bekannt. Die Reaktionen laufen bei etwa 150°C bis 400°C ab. Am Austritt des Reaktors 15 sind die Temperaturen wegen der Exothermie höher als am Eintritt.

Das heiße Gas aus dem Reaktor 15 kann durch Wassereinspritzung gekühlt werden. Vorzugsweise wird jedoch damit die Regeneriersäule 12 beheizt (Wärmetauscher 25), gegebenenfalls auf dem Umweg über ein Wärmeträgermedium. Das gekühlte Gas durchläuft einen Abscheider 26, in dem auskondensiertes Wasser abgetrennt, über Leitung 27 abgezogen und zum Teil über die gestrichelt dargestellte Leitung 24, gegebenenfalls gemischt mit Kondensat aus Leitung 29, zum Reaktionsraum des Reduziergaserzeugers 19 geleitet oder abgegeben wird. Das Gas aus dem Abscheider 26, das im wesentlichen aus $H_2S$, $N_2$, CO besteht, wird über Leitung 28 zum Reaktionsbehälter 6 zurückgeführt.

Gegebenenfalls kann in einem nichtdargestellten Behälter $H_2S$ im Lösungsmittel gelöst werden und dann das $H_2S$ beladene Lösungsmittel zum Behälter 6 geleitet werden. Die Restgase aus der $H_2S$-Auswaschung sind im allgemeinen so sauber, daß sie ins Reingas abgegeben werden können. Bei sehr hohen Anforderungen an die Abgasreinheit können diese Restgase auch in die Waschsäule 2 zurückgeführt werden.

Das Lösungsmittel aus dem Behälter 14 wird zur Regeneriersäule 12 geleitet, um dort Wasser und gegebenenfalls im Lösungsmittel angereicherte Inertgase abzutrennen. Die Regenerierung erfolgt vorzugsweise thermisch, kann aber auch durch Strippen erreicht werden. Daher wird das Lösungsmittel gegebenenfalls in einem Wärmetauscher 30 gegen heißes, regeneriertes Lösungsmittel angewärmt. Dann tritt es in die Säule ein, die über eine Sumpfheizung 25 (beheizt mit heißem Gas aus dem Reaktor 15 oder einem

anderen Heizmedium) beheizt und über eine Kopfkühlung 31 mit Kühlwasser gekühlt wird. Auskondensiertes Wasser wird in einem Abscheider 32 von eventuell anfallenden Inertgasen getrennt und über Leitung 29 zum Teil als Rücklauf über Leitung 33 der Regeneriersäule 12 aufgegeben, z.B. über Leitung 24 zur Kühlung des Gases hinter dem Brenner des Reduziergaserzeugers 19 eingespritzt und zum Teil abgegeben. Die Inertgase (51 Nm³/h) mit einer Temperatur von 50°C und einem Druck von 1,0 bar (8 Nm³/h $CO_2$ und 50 Nm³/h $H_2O$) gehen über Leitung 34 zum Kamin.

Das regenerierte Lösungsmittel wird am Sumpf der Regeneriersäule 12 über Leitung 35 abgezogen, im Wärmetauscher 30 gegebenenfalls gekühlt und - gegebenenfalls nach weiterer Kühlung in einem Wärmetauscher 36 gegen Fremdkälte - zur Waschsäule 2 zurückgeführt.

Wird das regenerierte Lösungsmittel, dessen Menge im allgemeinen nur einen Bruchteil (10%) der Gesamtlösungsmittelmenge beträgt, direkt zur Waschsäule 2 geleitet und dort im unteren Bereich eingespeist, so läßt sich gegebenenfalls der Wärmetauscher 30 einsparen. Dann allerdings muß das heiße, regenerierte Lösungsmittel vor der Einspeisung mit kaltem Lösungsmittel gemischt werden, um Schwefelausfall zu vermeiden.

Neben der Schwefelgewinnung aus Rauchgasen gibt es noch weitere Anwendungsbeispiele:

<u>Schwefelgewinnung aus dem Abgas einer Claus-Anlage</u>.
Zur Wäsche gehen 1000 mol/sec eines Claus-Abgases mit einem Druck von 1,22 bar und folgender Zusammensetzung:

| | |
|---|---|
| $N_2$ | 61,700 mol% |
| $CO_2$ | 5,5057 mol% |

| | |
|---|---|
| $H_2S$ | 0,0560 mol% |
| $SO_2$ | 0,0282 mol% |
| COS | 0,0107 mol% |
| $CS_2$ | 0,0013 mol% |
| $S_8$ | 0,1496 mol% |
| $H_2O$ | 35,5485 mol%. |

Bei der Umsetzung werden 1,57 mol/sec Elementarschwefel ($S_8$) gewonnen.

Der Restgehalt von 0,28 mol/sec $H_2S$, $SO_2$, COS und $CS_2$ wird ins Reingas ausgetragen, d.h. die Gesamtschwefelrückgewinnung beträgt ca. 99,9%.

Von insgesamt 0,722 mol/sec $H_2S$ + $SO_2$ werden 0,565 mol/sec (entspricht 78%) zu $S_8$ umgesetzt. Zusätzlich wird in der Wäsche der bereits vorher, d.h. in der Claus-Anlage, gebildete Elementarschwefel praktisch vollständig gewonnen, da der Schwefeldampfdruck bei der Temperatur der Wäsche (16,5°C) extrem niedrig ist. Der Schwefelverlust ins Reingas besteht aus

| | |
|---|---|
| COS | 0,107 mol% |
| $CS_2$ | 0,013 mol% |
| $H_2S$ | 0,040 mol% |
| $SO_2$ | 0,020 mol% |

Dies bedeutet, daß der Schwefelverlust zu etwa 79% aus den schwer umsetzbaren Komponenten COS und $CS_2$ besteht.

Schwefelgewinnung aus $SO_2$-Fraktion unter Verwendung von Claus-Rohgas zur Umsetzung

In die Wäsche werden 1.209,534 mol/sec einer $SO_2$-Fraktion der folgenden Zusammensetzung zugeführt:

0170253

| | |
|---|---|
| $N_2$ | 64,273 mol% |
| $O_2$ | 0,905 mol% |
| $CO_2$ | 5,446 mol% |
| $H_2S$ | 5 ppm |
| $SO_2$ | 0,688 mol% |
| $H_2O$ | 28,688 mol%. |

Die Inertgase, insbesondere $O_2$, werden nur in Spuren im Waschmittel gelöst. Zum $SO_2$-Umsatz wird Rohgas von einer Claus-Anlage zugegeben, und zwar 373,44 mol/sec der folgenden Zusammensetzung:

| | |
|---|---|
| $N_2$ | 5,5338 mol% |
| $CO_2$ | 11,9504 mol% |
| $CH_4$ | 1,7526 mol% |
| $C_{2+}$ | 0,4106 mol% |
| $H_2S$ | 74,2800 mol% |
| $H_2O$ | 6,0726 mol%. |

Es reagieren 22,5 mol/sec $H_2S + SO_2$ zu über 99,9% zu Elementarschwefel. Die Gesamtschwefelrückgewinnung ist also ca. 99,9%. Das Reingas hat folgende Zusammensetzung:

| | |
|---|---|
| $N_2$ | 90,322 mol% |
| $O_2$ | 1,272 mol% |
| $CO_2$ | 7,653 mol% |
| $H_2S$ | $<$10 ppm |
| $SO_2$ | $<$ 5 ppm |
| $COS/CS_2$ | - |
| $H_2O$ | 0,753 mol% |

## Patentansprüche

1. Verfahren zur Erzeugung von elementarem Schwefel aus $SO_2$, dadurch gekennzeichnet, daß das $SO_2$ in einem regenerierbaren Lösungsmittel gelöst, die Lösung mit einem Reduktionsmittel in Kontakt gebracht und der entstandene Schwefel von der Lösung abgetrennt wird.

2. Verfahren nach Anspruch 1, dadurch gekennzeichnet, daß die Lösung im Kreislauf geführt wird, wobei ab dem Inkontaktbringen mit dem Reduktionsmittel bis zur Schwefelabtrennung in der Lösung eine ungefähr bei oder über der Sättigung liegende Schwefelkonzentration aufrechterhalten wird, während nach der Schwefelabtrennung und im Zuge der Regenerierung des Lösungsmittels bis zum Wiederinberührungbringen mit dem Reduktionsmittel eine Schwefelkonzentration eingestellt wird, die deutlich unter der Sättigungsgrenze liegt.

3. Verfahren nach Anspruch 2, dadurch gekennzeichnet, daß während erhöhter Schwefelkonzentration die Temperatur der Lösung niedriger gehalten wird als während niedrigerer Schwefelkonzentration.

4. Verfahren nach einem der Ansprüche 1 bis 3, dadurch gekennzeichnet, daß die Lösung bei einer Temperatur zwischen -40°C und + 200°C, vorzugsweise 20°C und 60°C gehalten wird.

5. Verfahren nach einem der Ansprüche 1 bis 4, dadurch gekennzeichnet, daß das Reduktionsmittel in einem zur Umsetzung des $SO_2$ zu elementarem Schwefel ungefähr stöchiometrischen Verhältnis zugegeben wird.

6. Verfahren nach einem der Ansprüche 1 bis 5, dadurch gekennzeichnet, daß als Reduktionsmittel $H_2$ verwendet wird.

7. Verfahren nach einem der Ansprüche 1 bis 5, dadurch gekennzeichnet, daß als Reduktionsmittel $H_2S$ verwendet wird.

8. Verfahren nach Anspruch 6 oder 7, dadurch gekennzeichnet, daß ein vorzugsweise kohlenwasserstoffhaltiger Brennstoff unterstöchiometrisch verbrannt, das entstehende Gasgemisch mit flüssigem Schwefel in Kontakt gebracht wird, wobei ein Teil des Schwefels reduziert wird, abgekühlt, über einem Katalysator der Schwefel und Schwefelverbindungen zu $H_2S$ hydriert und das hierbei entstehende Gasgemisch als Reduktionsmittel eingesetzt wird.

9. Verfahren nach Anspruch 8, dadurch gekennzeichnet, daß die Hydrierung bei Temperaturen zwischen 150°C und 560°C durchgeführt wird.

10. Verfahren nach Anspruch 8 oder 9, dadurch gekennzeichnet, daß das Gasgemisch vor Einbringen in die Lösung gekühlt wird.

11. Verfahren nach einem der Ansprüche 1 bis 10, dadurch gegekennzeichnet, daß dem Lösungsmittel ein die Reaktionsgeschwindigkeit der Reduktion beschleunigender und/oder die Sedimentation des sich bildenden Schwefels begünstigender Zusatz zugegeben wird.

12. Verfahren nach einem der Ansprüche 1 bis 10, dadurch gekennzeichnet, daß der entstandene Schwefel aus der flüssigen Phase mittels eines Fest-Flüssig-Trennverfahrens abgetrennt wird.

13. Verfahren nach.Anspruch 12, dadurch gekennzeichnet, daß bei der Fest-Flüssig-Trennung ein konzentriertes Gemisch von festem Schwefel und flüssiger Phase abgezogen wird, das Gemisch soweit aufgeheizt wird, daß sich zwei flüssige Phasen ausbilden, und daß als die eine flüssige Phase Schwefel und als die andere flüssige Phase schwefelarmes Lösungsmittel abgezogen werden.

14. Verfahren nach Anspruch 13, dadurch gekennzeichnet, daß das Gemisch auf eine Temperatur ungefähr vom Schwefelschmelzpunkt aufgeheizt wird.

15. Verfahren nach Anspruch 13 oder 14, dadurch gekennzeichnet, daß die Aufheizung des Gemisches durch Abwärmenutzung aus der Verbrennung der kohlenwasserstoffhaltigen Brennstoffe durchgeführt wird.

1/1

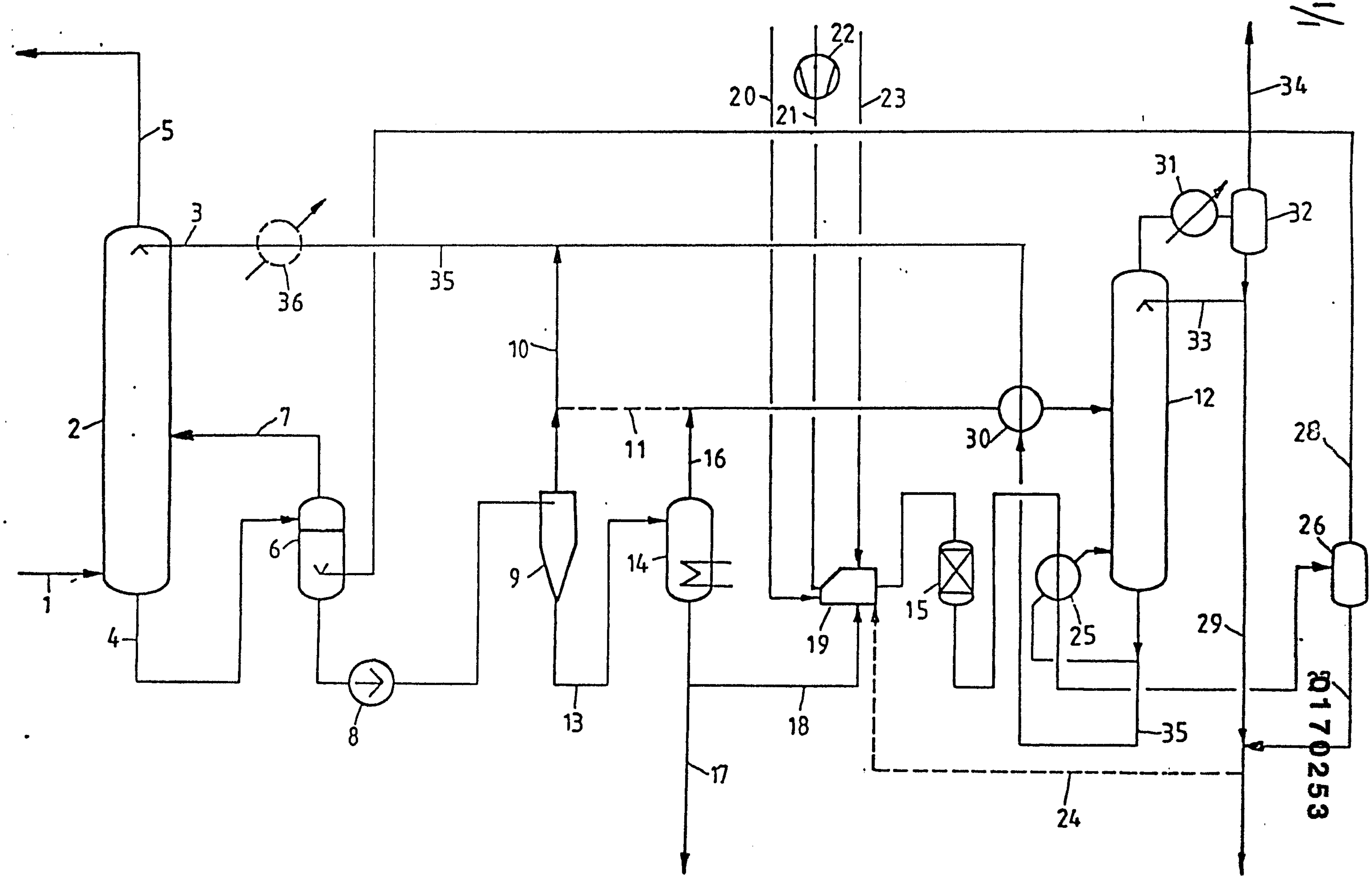
1
2
3
4
5
6
7
8
9
10
11
12
13
14
15
16
17
18
19
20
21
22
23
24
25
26
28
29
30
31
32
33
34
35
36

0170253